# EUROPÄISCHE PATENTSCHRIFT

(11) **EP 3 679 619 B1**
(45) Veröffentlichungstag und Bekanntmachung des Hinweises auf die Patenterteilung: **19.05.2021**
(21) Anmeldenummer: 18758823.1
(22) Anmeldetag: 06.08.2018
(51) Int. Cl.: H01M 8/1004, H01M 8/1018, H01M 4/86

(54) **MEMBRAN-ELEKTRODEN-ANORDNUNG, BRENNSTOFFZELLENSTAPEL SOWIE FAHRZEUG MIT EINEM SOLCHEN BRENNSTOFFZELLENSTAPEL**
MEMBRANE ELECTRODE ASSEMBLY, FUEL CELL STACK, AND VEHICLE COMPRISING SUCH A FUEL CELL STACK
ASSEMBLAGE MEMBRANE-ÉLECTRODES, EMPILEMENT DE CELLULES ÉLÉMENTAIRES AINSI QUE VÉHICULE DOTÉ D'UN TEL EMPILEMENT DE CELLULES ÉLÉMENTAIRES

(30) Priorität: 07.09.2017 DE 102017215741
(43) Veröffentlichungstag der Anmeldung: 15.07.2020
(73) Patentinhaber: Audi AG, 85045 Ingolstadt (DE); Volkswagen AG, 38440 Wolfsburg (DE)
(72) Erfinder: JILANI, Adel, Burnaby, British Columbia V5J 5J8 (CA); KUMAR, Sanjiv, Burnaby, British Columbia V5J 5J8 (CA); VOIGT, Sebastian, Vancouver, BC V6R 1G7 (CA)
(86) Internationale Anmeldenummer: PCT/EP2018/071215
(87) Internationale Veröffentlichungsnummer: WO 2019/048156

(56) Entgegenhaltungen:
- EP-A1- 2 996 184
- EP-A1- 3 316 367
- WO-A1-2016/208324
- DE-A1-102016 201 707
- JP-A- 2009 099 262
- US-A1- 2014 120 457
- US-A1- 2014 329 167

## Beschreibung

Die Erfindung betrifft einen Brennstoffzellenstapel, umfassend einen Stapel zwischen zwei Endplatten abwechselnd angeordneter Bipolarplatten und Membran-Elektroden-Anordnungen. Die Erfindung betrifft ferner ein Fahrzeug, das einen solchen Brennstoffzellenstapel umfasst.

Brennstoffzellen nutzen die chemische Umsetzung eines Brennstoffs mit Sauerstoff zu Wasser, um elektrische Energie zu erzeugen. Hierfür enthalten Brennstoffzellen als Kernkomponente die sogenannte Membran-Elektroden-Anordnung (MEA für *membrane electrode assembly*), die ein Gefüge aus einer ionenleitenden (meist protonenleitenden) Membran und jeweils einer beidseitig an der Membran angeordneten katalytischen Elektrode (Anode und Kathode) ist. Letztere umfassen zumeist geträgerte Edelmetalle, insbesondere Platin. Zudem können Gasdiffusionslagen (GDL) beidseitig der Membran-Elektroden-Anordnung an den der Membran abgewandten Seiten der Elektroden angeordnet sein. In der Regel wird die Brennstoffzelle durch eine Vielzahl im Stapel (*stack*) angeordneter MEA gebildet, deren elektrische Leistungen sich addieren. Zwischen den einzelnen Membran-Elektroden-Anordnungen sind in der Regel Bipolarplatten (auch Flussfeldoder Separatorplatten genannt) angeordnet, welche eine Versorgung der Einzelzellen mit den Betriebsmedien, also den Reaktanten, sicherstellen und üblicherweise auch der Kühlung dienen. Zudem sorgen die Bipolarplatten für einen elektrisch leitfähigen Kontakt zu den Membran-Elektroden-Anordnungen.

Im Betrieb der Brennstoffzelle wird der Brennstoff (Anodenbetriebsmedium), insbesondere Wasserstoff H₂ oder ein wasserstoffhaltiges Gasgemisch, über ein anodenseitiges offenes Flussfeld der Bipolarplatte der Anode zugeführt, wo eine elektrochemische Oxidation von H₂ zu Protonen H⁺ unter Abgabe von Elektronen stattfindet (H₂ → 2 H⁺ + 2 e⁻). Über den Elektrolyten oder die Membran, welche die Reaktionsräume gasdicht voneinander trennt und elektrisch isoliert, erfolgt ein

(wassergebundener oder wasserfreier) Transport der Protonen aus dem Anodenraum in den Kathodenraum. Die an der Anode bereitgestellten Elektronen werden über eine elektrische Leitung der Kathode zugeleitet. Der Kathode wird über ein kathodenseitiges offenes Flussfeld der Bipolarplatte Sauerstoff oder ein sauerstoffhaltiges Gasgemisch (zum Beispiel Luft) als Kathodenbetriebsmedium zugeführt, sodass eine Reduktion von O₂ zu O²⁻ unter Aufnahme der Elektronen stattfindet (½ O₂ + 2 e⁻ → O²⁻). Gleichzeitig reagieren im Kathodenraum die Sauerstoffanionen mit den über die Membran transportierten Protonen unter Bildung von Wasser (O²⁻ + 2 H⁺ → H₂O).

Die Versorgung des Brennstoffzellenstapels mit seinen Betriebsmedien, also dem Anodenbetriebsgas (z.B. Wasserstoff), dem Kathodenbetriebsgas (z.B. Luft) und dem Kühlmittel, erfolgt über Hauptversorgungskanäle, die den Stapel in seiner gesamten Stapelrichtung durchsetzen und von denen die Betriebsmedien über die Bipolarplatten den Einzelzellen zugeführt werden. Für jedes Betriebsmedium sind mindestens zwei solcher Hauptversorgungskanäle vorhanden, nämlich einer zur Zuführung und einer zur Abführung des jeweiligen Betriebsmediums.

JP 2009 099262 A offenbart Brennstoffzellen, die Gasdiffusionslagen mit länglichen, der Membran zugewandten Kanälen aufweisen. Weiterhin werden Bipolarplatten offenbart, die Strömungskanäle zum Transport der Betriebsgase sowie des in Folge der elektrochemischen Reaktion entstandenen Wassers aufweisen.

DE 10 2016 201 707 A1 offenbart Bipolarplatten, die sowohl anoden- als auch kathodenseitig Strukturen aufweisen, die als Kanäle für den Transport der Betriebsgase dienen.

EP 2 996 184 A1 behandelt Gasdiffusionslagen, die bestimmte Muster bestehend aus hydrophoben und hydrophilen Bereichen aufweisen. Diese finden Anwendung in einem Brennstoffzellenstapel in Kombination mit Separatorplatten, die anoden-und kathodenseitig Strukturen zur Bildung von Kanälen aufweisen.

US 2014/120457 A1 offenbart eine Laminarstruktur, die in einer Membran-Elektroden-Einheit für eine Brennstoffzelle verwendet wird.

EP 3 316 367 A1 offenbart eine Membran-Elektroden-Anordnung, die Gasdiffusionselektroden umfasst, die auf den beiden Seiten einer Polymerelektrolytmembran angeordnet sind. Die Gasdiffusionselektroden werden durch eine Katalysatorschicht sowie ein Gasdiffusionselektrodensubstrat gebildet. Das Gasdiffusionselektrodensubstrat weist diskontinuierliche Vorsprünge auf.

Brennstoffzellenstapel unterliegen Kompressionsdrücken, wobei typischerweise Hardware-Federn Einsatz finden, welche ein erhebliches Gewicht beitragen.

Der Erfindung liegt nun die Aufgabe zugrunde, einen Brennstoffzellenstapel, umfassend einen Stapel zwischen zwei Endplatten abwechselnd angeordneter Bipolarplatten und Membran-Elektroden-Anordnungen vorzuschlagen, welche Kompressionseigenschaften und den strukturellen Aufbau des Brennstoffzellenstapels verbessern.

Diese Aufgabe wird durch einen Brennstoffzellenstapel, umfassend einen Stapel zwischen zwei Endplatten abwechselnd angeordneter Bipolarplatten und Membran-Elektroden-Anordnungen sowie ein Fahrzeug mit einem solchen Brennstoffzellenstapel mit den Merkmalen des Anspruchs 1 gelöst.

Die Membran-Elektroden-Anordnung gemäß der Erfindung umfasst ein Membrangefüge mit einer Anodenschicht, einer Kathodenschicht und einer Membranschicht, wobei die Membranschicht zwischen Anodenschicht und Kathodenschicht positioniert ist. Ferner umfasst die Membran-Elektroden-Anordnung eine auf der Anodenschicht angeordnete anodenseitige Gasdiffusionslage. Ferner umfasst die Membran-Elektroden-Anordnung eine auf der Kathodenschicht angeordnete kathodenseitige Gasdiffusionslage. Ferner weist wenigstens eine der anodenseitigen Gasdiffusionslage und der kathodenseitigen Gasdiffusionslage auf der vom Membrangefüge abgewandten Seite eine Strukturierung auf. Erfindungsgemäß umfasst die Strukturierung eine Vielzahl von Säulen zur Ausbildung eines lateral offenen Strömungsfeldes, wobei die Säulen Anlegeflächen zum Anlegen einer Bipolarplatte aufweisen. Durch die Säulen der Gasdiffusionslage wird vorteilhaft eine Federwirkung unter Kompression erzielt, wodurch beispielsweise eine Hardware-Feder ersetzt werden kann. Ferner werden durch diese Säulen auch induzierte Spannungen verringert.

Die anodenseitige Gasdiffusionslage weist auf der vom Membrangefüge abgewandten Seite eine erste Strukturierung auf und/oder die kathodenseitige Gasdiffusionslage weist auf der vom Membrangefüge abgewandten Seite eine zweite Strukturierung auf, wobei die erste Strukturierung eine Vielzahl von ersten Säulen zur Ausbildung eines lateral offenen Strömungsfeldes umfasst, wobei die ersten Säulen erste Anlegeflächen zum Anlegen einer Bipolarplatte aufweisen. Ferner umfasst die zweite Strukturierung eine Vielzahl von zweiten Säulen, wobei die zweiten Säulen zweite Anlegeflächen zum Anlegen einer Bipolarplatte aufweisen. Hierbei ergibt sich eine beidseitige Säulenstruktur, wodurch die Federwirkung weiter verbessert bzw. verstärkt wird. Auch induzierte Spannungen könne weiter verringert werden.

Bevorzugt sind erste Säulen und zweite Säulen derart positioniert, dass zu jeder ersten Säule eine zweite Säule bezüglich dem Membrangefüge gegenüber positioniert ist. Hierbei ergibt sich eine beidseitige Säulenstruktur, wobei die Säulen eine linear Anordnung bilden. Die Kompressionseigenschaften und die Federwirkung werden dadurch weiter verstärkt.

Die erste Säule kann eine erste Höhe aufweisen, die zweite Säule kann eine zweite Höhe aufweisen, wobei die erste Höhe und/oder die zweite Höhe 250-450 µm beträgt, noch bevorzugter 300-400 µm beträgt, besonders bevorzugt 350 µm beträgt. Diese Höhen sind besondere geeignet, um das Design besonders robust zu machen. Insbesondere wird durch diese Dicke eine Steifigkeit zum Erzielen einer zurückfedernden Wirkung bewirkt.

Der erfindungsgemäße Brennstoffzellenstapel weist eine erhöhte strukturelle Integrität wegen der säulenartigen Strukturierung der Membran-Elektroden-Anordnung auf. Es kann auf eine zusätzliche Hardware-Feder verzichtet werden. Dadurch kann auch das Gewicht des Brennstoffzellenstapel deutlich reduziert werden.

Die Bipolarplatte umfasst erfindungsgemäß eine Anodenplatte, deren Anodenseite der anodenseitigen Gasdiffusionslage der Membran-Elektroden-Anordnung zugewandt ist, und eine Kathodenplatte, deren Kathodenseite der kathodenseitigen Gasdiffusionslage der Membran-Elektroden-Anordnung zugewandt ist, wobei die Anodenseite der Anodenplatte und/oder die Kathodenseite der Kathodenplatte eben ausgebildet sind. Die Bipolarplatte ist demnach auf einer Seite strukturlos ausgebildet, was Produktionskosten reduziert und ein sicheres Aufliegen der Bipolarplatte gewährleistet.

Vorteilhaft umfasst wenigstens eine der Kühlmittelseiten der Anodenplatte oder der Kathodenplatte eine dritte Strukturierung zur Ausbildung eines lateral offenen Kühlmittelströmungsfeldes und die dritte Strukturierung eine Vielzahl von dritten Säulen umfasst, wobei die dritten Säulen mit den ersten Säulen und den zweiten Säulen entlang einer Stapelrichtung übereinander positioniert sind. In anderen Worten sind alle Säulen übereinander gestapelt. Es ergibt sich eine weiterhin verbesserte Federwirkung durch die Säulenstruktur und die strukturelle Robustheit der Bipolarplatten wird erhöht.

Bevorzugt ist entweder die Anodenplatte oder die Kathodenplatte beidseitig flach ausgebildet. Durch die Einfachheit der Bipolarplatte können Kosten und Produktionsaufwand reduziert werden. Zudem kann die Bipolarplatte besonders stabil ausgebildet werden.

Ein weiterer Aspekt der Erfindung betrifft ein Brennstoffzellensystem, das einen Brennstoffzellenstapel gemäß der Erfindung aufweist. Insbesondere weist das Brennstoffzellensystem neben dem Brennstoffzellenstapel eine Anodenversorgung und eine Kathodenversorgung mit den entsprechenden Peripheriekomponenten auf.

Ein weiterer Aspekt der Erfindung betrifft ein Fahrzeug mit einem erfindungsgemäßen Brennstoffzellenstapel. Bei dem Fahrzeug handelt es sich vorzugsweise um ein Elektrofahrzeug, bei dem eine von dem Brennstoffzellensystem erzeugte elektrische Energie der Versorgung eines Elektrotraktionsmotors und/oder einer Traktionsbatterie bedient.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Blockschaltbild eines Brennstoffzellensystems gemäß einer bevorzugten Ausgestaltung;
- Figur 2: eine erfindungsgemäße Membran-Elektroden-Anordnung in Schrägansicht nach einer bevorzugten Ausführungsform; und
- Figur 3: ein Abschnitt eines erfindungsgemäßen Brennstoffzellenstapel in Queransicht gemäß einer bevorzugten Ausgestaltung.

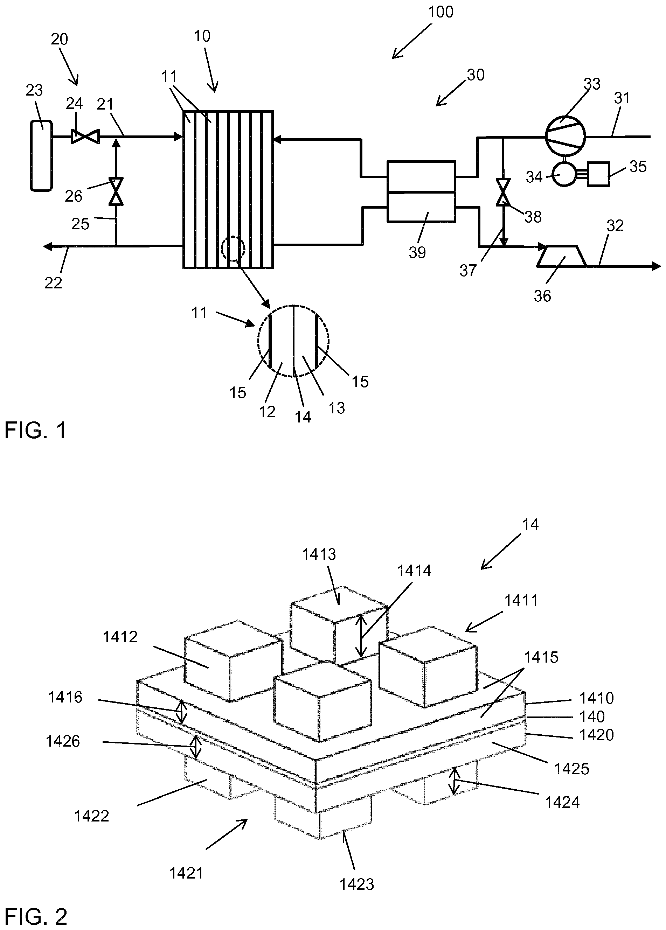

Figur 1 zeigt ein insgesamt mit 100 bezeichnetes Brennstoffzellensystem gemäß einer bevorzugten Ausgestaltung der vorliegenden Erfindung. Das Brennstoffzellensystem 100 ist Teil eines nicht weiter dargestellten Fahrzeugs, insbesondere eines Elektrofahrzeugs, das einen Elektrotraktionsmotor aufweist, der durch das Brennstoffzellensystem 100 mit elektrischer Energie versorgt wird.

Das Brennstoffzellensystem 100 umfasst als Kernkomponente einen Brennstoffzellenstapel 10, der eine Vielzahl von in Stapelform angeordneten Einzelzellen 11 aufweist, die durch abwechselnd gestapelte Membran-Elektroden-Anordnungen (MEA) 14 und Bipolarplatten 15 ausgebildet werden (siehe Detailausschnitt). Jede Einzelzelle 11 umfasst somit jeweils eine MEA 14, die eine Membranschicht, welche bevorzugt eine ionenleitfähige Polymerelektrolytmembran ist, sowie beidseits daran angeordnete katalytische Elektroden umfassen, nämlich eine Anodenschicht und eine Kathodenschicht, welche die jeweilige Teilreaktion der Brennstoffzellenumsetzung katalysieren und insbesondere als Beschichtungen auf der Membranschicht ausgebildet sind. Die Anoden- und Kathodenelektrode weisen ein katalytisches Material auf, beispielsweise Platin, das auf einem elektrisch leitfähigen Trägermaterial großer spezifischer Oberfläche, beispielsweise einem kohlenstoffbasierten Material, geträgert vorliegt. Zwischen einer Bipolarplatte 15 und der Anode wird somit ein Anodenraum 12 ausgebildet und zwischen der Kathode und der nächsten Bipolarplatte 15 der Kathodenraum 13. Die Bipolarplatten 15 stellen ferner die elektrische Verbindung zwischen den einzelnen Brennstoffzellen 11 her. Zudem verfügen sie über ein System innerer Kühlmittelkanäle, die der Durchleitung eines Kühlmittels und somit der Temperierung des Stapels 10 dienen. Zudem umfasst die Membran-Elektroden-Anordnung 14 Gasdiffusionslagen 1410, 1420, die den Bipolarplatten 15 zugewandt sind.

Um den Brennstoffzellenstapel 10 mit den Betriebsmedien zu versorgen, weist das Brennstoffzellensystem 100 einerseits eine Anodenversorgung 20 und andererseits eine Kathodenversorgung 30 auf.

Die Anodenversorgung 20 umfasst einen Anodenversorgungspfad 21, welcher der Zuführung eines Anodenbetriebsmediums (dem Brennstoff), beispielsweise Wasserstoff, in die Anodenräume 12 des Brennstoffzellenstapels 10 dient. Zu diesem Zweck verbindet der Anodenversorgungspfad 21 einen Brennstoffspeicher 23 mit einem Anodeneinlass des Brennstoffzellenstapels 10. Die Anodenversorgung 20 umfasst ferner einen Anodenabgaspfad 22, der das Anodenabgas aus den Anodenräumen 12 über einen Anodenauslass des Brennstoffzellenstapels 10 abführt. Der Anodenbetriebsdruck auf den Anodenseiten 12 des Brennstoffzellenstapels 10 ist über ein Stellmittel 24 in dem Anodenversorgungspfad 21 einstellbar. Darüber hinaus kann die Anodenversorgung 20 wie dargestellt eine Brennstoff-Rezirkulationsleitung 25 aufweisen, welche den Anodenabgaspfad 22 mit dem Anodenversorgungspfad 21 verbindet. In der Brennstoff-Rezirkulationsleitung 25 ist eine Fördereinrichtung 26 angeordnet, beispielsweise ein elektromotorisch angetriebener Verdichter, welche die Förderung des Anodenabgases bewirkt. Die Rezirkulation von Brennstoff ist üblich, um den zumeist überstöchiometrisch eingesetzten Brennstoff dem Stapel zurückzuführen und zu nutzen.

Die Kathodenversorgung 30 umfasst einen Kathodenversorgungspfad 31, welcher den Kathodenräumen 13 des Brennstoffzellenstapels 10 ein sauerstoffhaltiges Kathodenbetriebsmedium zuführt, insbesondere Luft, die aus der Umgebung angesaugt wird. Die Kathodenversorgung 30 umfasst ferner einen Kathodenabgaspfad 32, welcher das Kathodenabgas (insbesondere die Abluft) aus den Kathodenräumen 13 des Brennstoffzellenstapels 10 abführt und dieses gegebenenfalls einer nicht dargestellten Abgasanlage zuführt. Zur Förderung und Verdichtung des Kathodenbetriebsmediums ist in dem Kathodenversorgungspfad 31 ein Verdichter 33 angeordnet. In dem dargestellten Ausführungsbeispiel ist der Verdichter 33 als ein hauptsächlich elektromotorisch angetriebener Verdichter ausgestaltet, dessen Antrieb über einen mit einer entsprechenden Leistungselektronik 35 ausgestatteten Elektromotor 34 erfolgt. Der Verdichter 33 kann ferner durch eine im Kathodenabgaspfad 32 angeordnete Turbine 36 (gegebenenfalls mit variabler Turbinengeometrie) unterstützend über eine gemeinsame Welle angetrieben werden.

Die Kathodenversorgung 30 kann gemäß dem dargestellten Ausführungsbeispiel ferner eine Wastegate-Leitung 37 aufweisen, welche die Kathodenversorgungspfad 31 mit dem Kathodenabgaspfad 32 verbindet, also einen Bypass des Brennstoffzellenstapels 10 darstellt. Die Wastegate-Leitung 37 erlaubt, überschüssigen Luftmassenstrom an dem Brennstoffzellenstapel 10 vorbeizuführen, ohne den Verdichter 33 herunterzufahren. Ein in der Wastegate-Leitung 37 angeordnetes Stellmittel 38 dient der Steuerung der Menge des den Brennstoffzellenstapel 10 umgehenden Kathodenbetriebsmediums. Sämtliche Stellmittel 24, 38 des Brennstoffzellensystems 100 können als regelbare oder nicht regelbare Ventile oder Klappen ausgebildet sein. Entsprechende weitere Stellmittel können in den Leitungen 21, 22, 31 und 32 angeordnet sein, um den Brennstoffzellenstapel 10 von der Umgebung isolieren zu können.

Das Brennstoffzellensystem 100 kann ferner einen Befeuchter 39 aufweisen. Der Befeuchter 39 ist einerseits so in dem Kathodenversorgungspfad 31 angeordnet, dass er von dem Kathodenbetriebsgas durchströmbar ist. Andererseits ist er so in dem Kathodenabgaspfad 32 angeordnet, dass er von dem Kathodenabgas durchströmbar ist. Der Befeuchter 39 weist typischerweise eine Mehrzahl von wasserdampfpermeablen Membranen auf, die entweder flächig oder in Form von Hohlfasern ausgebildet sind. Dabei wird eine Seite der Membranen von dem vergleichsweise trockenen Kathodenbetriebsgas (Luft) überströmt und die andere Seite von dem vergleichsweise feuchten Kathodenabgas (Abgas). Getrieben durch den höheren Partialdruck an Wasserdampf in dem Kathodenabgas kommt es zu einem Übertritt von Wasserdampf über die Membran in das Kathodenbetriebsgas, das auf diese Weise befeuchtet wird.

Verschiedene weitere Einzelheiten der Anoden- und Kathodenversorgung 20, 30 sind in der vereinfachten Figur 1 aus Gründen der Übersichtlichkeit nicht gezeigt. So kann in dem Anoden- und/oder Kathodenabgaspfad 22, 32 ein Wasserabscheider verbaut sein, um das aus der Brennstoffzellenreaktion entstehende Produktwasser zu kondensieren und abzuleiten. Schließlich kann der Anodenabgaspfad 22 in den Kathodenabgaspfad 32 münden, sodass das Anodenabgas und das Kathodenabgas über eine gemeinsame Abgasanlage abgeführt werden.

In der Figur 2 ist eine erfindungsgemäße Membran-Elektroden-Anordnung 14 nach einer bevorzugten Ausführungsvariante gezeigt. Die Membran-Elektroden-Anordnung 14 umfasst dabei ein Membrangefüge 140 mit einer Anodenschicht, eine Kathodenschicht sowie einer Membranschicht, wobei die Membranschicht zwischen der Anodenschicht und der Kathodenschicht positioniert ist. Auf der Anodenschicht ist ferner eine anodenseitige Gasdiffusionslage 1410 angeordnet. Auf der Kathodenschicht ist ferner eine kathodenseitige Gasdiffusionslage 1420 angeordnet.

Die anodenseitige Gasdiffusionslage 1410 weist in dieser Ausführungsvariante auf der zum Membrangefüge 140 abgewandten Seite eine erste Strukturierung 1411 auf. Die erste Strukturierung 1411 der anodenseitigen Gasdiffusionslage 1410 umfasst eine Vielzahl von ersten Säulen 1412 zur Ausbildung eines lateral offenen Strömungsfeldes. Dieses Strömungsfeld ist bevorzugt für den Transport von Anodenbetriebsgasen wie beispielsweise Sauerstoff, Luft oder auch anderen geeigneten Anodenbetriebsgasen ausgelegt. Diese ersten Säulen 1412 bilden erste Anlegeflächen 1413 aus, welche dabei dem Anlegen einer Bipolarplatte 15 dienen. Ferner weist in dieser Ausführungsvariante die kathodenseitige Gasdiffusionslage 1420 auf der zum Membrangefüge 140 abgewandten Seite eine zweite Strukturierung 1421 auf, welche in dieser Ausführungsform ebenfalls eine Vielzahl von zweiten Säulen 1422 zum Ausbilden eines lateral offenen Strömungsfeldes aufweist, die wiederum zweite Anlegeflächen 1423 zum Anlegen einer Bipolarplatte ausbilden. Dieses Strömungsfeld ist bevorzugt für den Transport von Kathodenbetriebsgasen wie beispielsweise Wasserstoff ausgebildet.

Die Erfindung ist jedoch nicht darauf beschränkt, dass sowohl die anodenseitige Gasdiffusionslage 1410 als auch die kathodenseitige Gasdiffusionslage 1420 strukturiert sind. In anderen Ausführungsformen der Membran-Elektroden-Anordnung 14 weist nur die anodenseitige Gasdiffusionslage 1410 eine erste Strukturierung 1411 mit ersten Säulen 1412 zur Ausbildung eines lateral offenen Strömungsfeldes auf, während die kathodenseitige Gasdiffusionslage 1420 beispielsweise eben ausgebildet ist. In einer weiteren Ausführungsform der Membran-Elektroden-Anordnung 14 weist nur die kathodenseitige Gasdiffusionslage 1420 eine zweite Strukturierung 1421 mit zweiten Säulen 1422 zur Ausbildung eines lateral offenen Strömungsfeldes auf, während die anodenseitige Gasdiffusionslage 1410 beispielsweise eben ausgebildet ist. Demnach ist also stets mindestens eine der Gasdiffusionslagen 1410, 1420 mit einer mit Säulen 1412, 1422 versehenen Strukturierung 1411, 1421 ausgebildet.

Vorteile ergeben sich durch die säulenartigen Erhebungen darin, dass diese sich unter Kompression wie Federn verhalten. Damit werden auch induzierte Spannungen minimiert. Beim Einsatz in einem in einem Brennstoffzellenstapel kann dann auf eine externe Hardware-Feder verzichtet werden, was vorteilhaft zu einer deutlichen Gewichtsreduzierung führt. Als Material für die Gasdiffusionslagen 1410, 1420 und deren Säulen 1412, 1422 kommen bevorzugt kohlenstoff-basierte Materialien zum Einsatz. Beispielsweise kann die Gasdiffusionslage aus einem zweilagigen kohlenstoff-basierten poröses Material bestehen, welches ein makroporöses Trägermaterial (Kohlenstofffaser-Papier oder Kohlenstofftuch) und eine dünne mikroporöse kohlenstoffbasierte Schicht umfasst. In einer derartigen Ausführung bestimmt das Trägermaterial die mechanischen Eigenschaften unter Kompression, Biegung oder Scherung. Auch unterschiedliche morphologische Zustände und Formen des Kohlenstoffs können verwendet werden wie beispielsweise Kohlenstoffnanostrukturen, Graphen oder Graphenschaum, Kohlenstoffnanoröhrchen oder Kohlenstoff-Nanofasern.

In dieser beispielhaften Ausführung sind die ersten Säulen 1412 und zweite Säulen 1422 derart positioniert, dass zu jeder ersten Säule 1412 eine zweite Säule 1422 bezüglich dem Membrangefüge 140 gegenüberliegt. Es ergibt sich in dieser Ausführung unter Kompression eine verstärkte Federwirkung der gegenüberliegenden Säulen 1412, 1422, wodurch eine Hardware-Feder für den Brennstoffzellenstapel 10 ersetzt werden kann.

In dieser bevorzugten Ausführungsform ist ferner eine erste Höhe 1414 der ersten Säule 1412 und eine zweite Höhe 1424 der zweiten Säule 1422 identisch. In anderen Ausführungsformen können sich die ersten Säulen 1412 von den zweiten Säulen 1422 unterscheiden. Rein beispielhaft weisen die ersten Säulen 1412 und die zweiten Säulen 1422 einen quadratischen Querschnitt auf. Die Erfindung ist dabei jedoch nicht auf eine bestimmte Querschnittsform beschränkt, sondern es können auch rechteckige oder runde Querschnitte oder andere zweckmäßige Querschnitte in Betracht kommen.

Die Säulen 1412, 1422 in der vorliegenden Ausführungsform bilden beispielhaft ein Gitter aus noppenartigen, bzw. inselartigen Säulen 1412, 1422 aus. Dadurch wird entsprechend ein Strömungsfeld erzeugt, dass lateral offen ist. In anderen Worten stellen die Säulen 1412, 1422 in diesem Fall lediglich ein Gitter aus isolierten Säulen dar, wodurch weiterhin ein sich in zwei Dimensionen erstreckendes verbundenes Strömungsfeld ausgebildet ist.

Die ersten Höhen 1414 der ersten Säulen 1412 der anodenseitigen Gasdiffusionslagen 1410 weisen vorteilhaft einen Wert von 350 µm auf, der mit dem Wert der zweiten Höhen 1424 der zweiten Säulen 1422 rein beispielhaft übereinstimmt. Ferner weist die anodenseitige Gasdiffusionslage 1410 einen ebenen ersten Sockel 1415 auf, bezüglich dessen sich die ersten Höhen 1414 der ersten Säulen 1412 bemessen. Eine erste Sockelhöhe 1416 des ersten Sockels weist rein beispielhaft einen Wert von 185 µm auf, wobei die Erfindung nicht auf diesen Wert beschränkt ist. Ferner weist in dieser Ausführungsvariante die kathodenseitige Gasdiffusionslage 1420 einen ebenen zweiten Sockel 1425 auf, bezüglich dessen sich die zweiten Höhen 1424 der zweiten Säulen 1422 bemessen. Eine zweite Sockelhöhe 1426 des zweiten Sockels 1425 weist beispielhaft einen gleichen Wert von 185 µm auf.

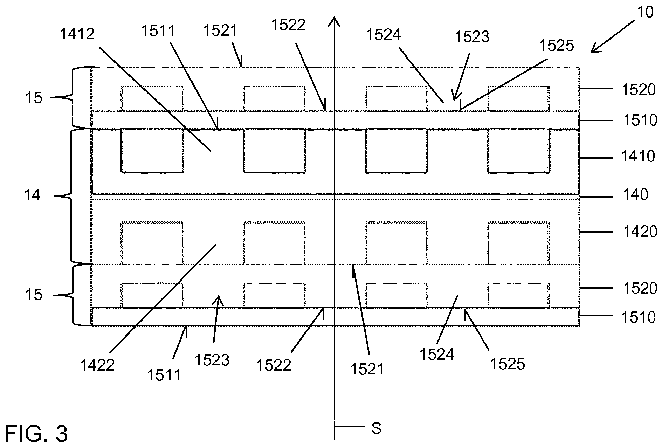

In der Figur 3 wird ferner ein Brennstoffzellenstapel 10, beziehungsweise ein Abschnitt eines solchen Brennstoffzellenstapels 10, nach einer bevorzugten Ausführungsform in Seitenansicht gezeigt. Der Brennstoffzellenstapel 10 umfasst dabei eine erfindungsgemäße Membran-Elektroden-Anordnung 14, welche zwischen zwei Bipolarplatten 15 eingebracht ist. Dabei erstreckt sich die Stapelung aus den abwechselnd angeordneten Bipolarplatten 15 und Membran-Elektroden-Anordnungen 14 des Brennstoffzellenstapels 10 entlang einer Stapelrichtung S.

Die zwischen den Bipolarplatten 15 positionierte Membran-Elektroden-Anordnung 14 entspricht dabei der in Figur 2 beschriebenen Ausführungsform. Für eine nähere Beschreibung dieser Membran-Elektroden-Anordnung 14 und weiteren Ausführungsvarianten wird entsprechend auf Figur 2 und die dazugehörige Beschreibung verwiesen.

Im Folgenden wird die im Brennstoffzellenstapel 10 verwendete Bipolarplatte 15 näher beschrieben. Die Bipolarplatte 15 umfasst dabei eine Anodenplatte 1510, deren Anodenseite 1511 der anodenseitigen Gasdiffusionslage 1410 der Membran-Elektroden-Anordnung 14 zugewandt ist bzw. an dieser anliegt. Ferner umfasst die Bipolarplatte 15 eine Kathodenplatte 1520, deren Kathodenseite 1521 der kathodenseitigen Gasdiffusionslage 1420 der Membran-Elektroden-Anordnung 14 zugewandt ist.

In der vorliegenden Ausführungsform ist dabei die Anodenseite 1511 der Anodenplatte 1510 eben ausgebildet. In anderen Worten ist die Anodenseite 1511 strukturlos ausgebildet. Durch die ebene Anodenseite 1511 wird das von der ersten Strukturierung 1411 der anodenseitigen Gasdiffusionslage 1410 ausgebildete Strömungsfeld abgedeckt bzw. in eine Stapelrichtung S geschlossen.

Weiterhin ist in der vorliegenden Ausführungsform auch die Kathodenseite 1521 der Kathodenplatte 1520 eben ausgebildet. In anderen Worten ist die Kathodenseite 1521 strukturlos ausgebildet. Durch die ebene Kathodenseite 1521 wird das von der zweiten Strukturierung 1421 der kathodenseitigen Gasdiffusionslage 1420 ausgebildete Strömungsfeld abgedeckt bzw. in Stapelrichtung S geschlossen. Es ergibt sich, dass die Bipolarplatte 15 demnach keine Strukturen für die Betriebsgase aufweisen muss, da diese in der Membran-Elektroden-Anordnung 14 bereits vorliegen. Somit kann ein einfacherer Aufbau der Bipolarplatte 15 erfolgen.

In anderen Ausführungsformen, bei denen nur die kathodenseitige Gasdiffusionslage 1420 der Membran-Elektroden-Anordnung 14 strukturiert ist, ist dann nur die Kathodenseite 1521 der Kathodenplatte 1520 flach ausgebildet. In weiteren Ausführungsformen, bei denen nur die anodenseitige Gasdiffusionslage 1410 strukturiert ist, ist dann nur die Anodenseite 1511 der Anodenplatte 1510 flach ausgebildet.

Ferner bildet in dieser Ausführungsform die Bipolarplatte 15 ein innenliegendes Kühlmittelströmungsfeld aus. Dazu weist hierzu beispielhaft die Kühlmittelseite 1522 der Kathodenplatte 1520 eine dritte Strukturierung 1523 aus. Die dritte Strukturierung 1523 umfasst dabei entsprechende dritte Säulen 1524 zur Ausbildung eines lateral offenen Kühlmittelströmungsfeldes, die wiederum dritte Anlegeflächen 1525 zum Anlegen der Anodenplatte 1510 aufweisen. In dieser bevorzugten Ausführungsform ist die Anodenplatte 1510 beidseitig flach ausgebildet, so dass Kühlmittelseite der Anodenplatte 1510 das Kühlmittelströmungsfeld in eine Stapelrichtung S abschließt bzw. abdeckt.

Diese einfach strukturierten Bipolarplatten 15 sind dabei besonders stabil. Zudem sind die dritten Säulen 1524 derart positioniert, dass die dritten Säulen 1524 mit den ersten Säulen 1412 der Membran-Elektroden-Anordnung 14 und den zweiten Säulen 1422 der Membran-Elektroden-Anordnung 14 entlang der Stapelrichtung S übereinander positioniert sind. In anderen Worten bilden, die ersten, zweiten und dritten Säulen 1412, 1422, 1524 eine lineare Anordnung in Stapelrichtung S aus.

Bei Kompression der beschriebenen Brennstoffzellenstapels wird die Membran-Elektroden-Anordnung 14 komprimiert. Dabei wird werden die ersten Säulen 1412 und die zweiten Säulen 1422 jeweils elastisch zusammengestaucht, so dass sich die erste Höhe 1414 und die zweite Höhe 1424 von einem beispielhaften Wert von 350 µm zum Beispiel auf einen Wert von beispielweise 260 µm-280 µm verringert. Die ersten und zweiten Säulen 1412, 1422 in Kombination mit den dritten Säulen 1524 haben demnach eine entsprechende Federwirkung, was eine zusätzliche Hardware-Feder für den Brennstoffzellenstapel 10 ersetzt.

Eine Höhe der Anodenplatte 1510 ist beispielhaft mit einem Wert von 150 µm ausgebildet, wobei die Erfindung nicht auf diesen Wert beschränkt ist. Die Höhe der dritten Säule ist ferner beispielhaft 200 µm und die Breite der dritten Säule 1524 wie auch der zweiten Säule 1422 und der ersten Säule 1412 beträgt beispielhaft 500 µm. Diese Bemessungen stellen eine optimierte Ausführungsvariante dar.

Mit Hilfe der Finite-Elemente-Methode ist die strukturelle Integrität der hierbei beschriebenen Membran-Elektroden-Anordnung 14 und des Brennstoffzellenstapels 10 quantifiziert. Bei einer Kompression der Membran-Elektroden-Anordnung 14 um beispielsweise etwa 204 µm, was einem Anlegedruck von 1,15 MPa entspricht, ergibt sich ein Kontaktdruck von 200KPa an der Grenzfläche von Gasdiffusionslagen 1410, 1420 und Membrangefüge 140, was einer hohen Performance entspricht. Die maximal induzierten Zugspannungen an den dritten Anlegeflächen 1525 der Kathodenplatte 1520 der Bipolarplatte 15 betragen dabei 0,16 MPa. Bei lateralen Verschiebungen der Kathodenplatte 1520 gegenüber der Anodenplatte 1510, wie es im Fertigungsprozess durch Toleranzen häufig geschieht, ergibt sich eine maximal induzierte Zugspannung von 3,5 MPa bei lateraler Verschiebung von 250 µm. Weiterhin wurde mittels numerischer Strömungsmechanik (CFD) für die Betriebsmittelströmungsfelder in den Gasdiffusionslagen 1410, 1420 und das Kühlmittelfeldes in den Kühlmittelkanälen Druckabfälle von folgenden Werten gefunden: 350 mbar für Sauerstoff, 130 mbar für Wasserstoff und 500 mbar für das Kühlmittel geführt. Weitere Optimierungen können durch verbesserte Formgestaltung der Säulen erfolgen. Die erzielten numerischen Werte demonstrieren die verbesserte strukturelle Integrität der vorgeschlagenen Membran-Elektroden-Anordnung 14 und des vorgeschlagenen Brennstoffzellenstapels 10.

In anderen Ausführungsformen kann eine dritte Strukturierung 1523 auch auf der Kühlmittelseite der Anodenplatte 1510 ausgeformt sein. In einem solchen Fall ist dann die Kathodenplatte 1520 beidseitig flach ausgebildet, so dass sich ebenfalls ein innenliegendes Kühlmittelströmungsfeld ausbildet. Alternativ kann die Bipolarplatte 15 auch integral geformt sein. Als Material können kohlenstoff-basierte Materialien oder Mischungen mit Metallen Einsatz finden.

### Bezugszeichenliste

- 100: Brennstoffzellensystem

- 10: Brennstoffzellenstapel
- 11: Einzelzelle
- 12: Anodenraum
- 13: Kathodenraum

- 14: Membran-Elektroden-Anordnung (MEA)
- 140: Membrangefüge (Membranschicht, Anodenschicht, Kathodenschicht)

- 1410: anodenseitige Gasdiffusionslage
- 1411: erste Strukturierung
- 1412: erste Säule
- 1413: erste Anlegefläche
- 1414: erste Höhe
- 1415: erster Sockel
- 1416: erste Sockelhöhe

- 1420: kathodenseitige Gasdiffusionslage
- 1421: zweite Strukturierung
- 1422: zweite Säule
- 1423: zweite Anlegefläche
- 1424: zweite Höhe
- 1425: zweiter Sockel
- 1426: zweite Sockelhöhe

- 15: Bipolarplatte (Separatorplatte, Flussfeldplatte)
- 1510: Anodenplatte
- 1511: Anodenseite
- 1520: Kathodenplatte
- 1521: Kathodenseite
- 1522: Kühlmittelseite
- 1523: dritte Strukturierung
- 1524: dritte Säule
- 1525: dritte Anlegefläche

- 20: Anodenversorgung
- 21: Anodenversorgungspfad
- 22: Anodenabgaspfad
- 23: Brennstofftank
- 24: Stellmittel
- 25: Brennstoffrezirkulationsleitung
- 26: Fördereinrichtung

- 30: Kathodenversorgung
- 31: Kathodenversorgungspfad
- 32: Kathodenabgaspfad
- 33: Verdichter
- 34: Elektromotor
- 35: Leistungselektronik
- 36: Turbine
- 37: Wastegate-Leitung
- 38: Stellmittel
- 39: Befeuchter

- S: Stapelrichtung

## Patentansprüche

1. Brennstoffzellenstapel (10), umfassend einen Stapel abwechselnd zwischen zwei Endplatten angeordneter Bipolarplatten (15) und Membran-Elektroden-Anordnungen (14),
wobei die Membran-Elektroden-Anordnung (14) Folgendes umfasst:
- ein Membrangefüge (140) mit einer Anodenschicht, einer Kathodenschicht und einer Membranschicht, die zwischen Anodenschicht und Kathodenschicht positioniert ist,
- eine auf der Anodenschicht angeordnete anodenseitige Gasdiffusionslage (1410), und
- eine auf der Kathodenschicht angeordnete kathodenseitige Gasdiffusionslage (1420),
wobei wenigstens eine der anodenseitigen Gasdiffusionslage (1410) und der kathodenseitigen Gasdiffusionslage (1420) auf der zum Membrangefüge (140) abgewandten Seite eine Strukturierung (1411, 1421) aufweist, die eine Vielzahl von Säulen (1412, 1422) zur Ausbildung eines lateral offenen Strömungsfeldes umfasst, wobei die Säulen (1412, 1422) Anlegeflächen (1413, 1423) zum Anlegen der Bipolarplatte (15) aufweisen; und
wobei die Bipolarplatte (15) Folgendes umfasst:
- eine Anodenplatte (1510), deren Anodenseite (1511) der anodenseitigen Gasdiffusionslage (1410) der Membran-Elektroden-Anordnungen (14) zugewandt ist, und
- eine Kathodenplatte (1520), deren Kathodenseite (1521) der kathodenseitigen Gasdiffusionslage (1420) der Membran-Elektroden-Anordnungen (14) zugewandt ist,
**dadurch gekennzeichnet, dass** die Anodenseite (1511) der Anodenplatte (1510) und/oder die Kathodenseite (1521) der Kathodenplatte (1520) eben ausgebildet sind.

2. Brennstoffzellenstapel (10) nach Anspruch 1, **dadurch gekennzeichnet, dass** die anodenseitige Gasdiffusionslage (1410) auf der vom Membrangefüge(140) abgewandten Seite eine erste Strukturierung (1411) aufweist und die kathodenseitige Gasdiffusionslage (1420) auf der vom Membrangefüge (140) abgewandten Seite eine zweite Strukturierung (1421) aufweist, wobei die erste Strukturierung (1411) eine Vielzahl von ersten Säulen (1412) zur Ausbildung eines lateral offenen Strömungsfeldes umfasst, wobei die ersten Säulen (1412) erste Anlegeflächen (1413) zum Anlegen einer Bipolarplatte (15) aufweisen; und die zweite Strukturierung (1421) eine Vielzahl von zweiten Säulen (1422) zur Ausbildung eines lateral offenen Strömungsfeldes umfasst, wobei die zweiten Säulen (1422) zweite Anlegeflächen (1423) zum Anlegen einer Bipolarplatte (15) aufweisen.

3. Brennstoffzellenstapel (10) nach Anspruch 2, **dadurch gekennzeichnet, dass** erste Säulen (1412) und zweite Säulen (1422) derart positioniert sind, dass zu jeder ersten Säule (1412) eine zweite Säule (1422) bezüglich dem Membrangefüge (140) gegenüberliegend positioniert ist.

4. Brennstoffzellenstapel (10) nach einem der Ansprüche 2 bis 3, **dadurch gekennzeichnet, dass** die ersten Säulen (1412) eine ersten Höhe (1414) aufweisen, die zweiten Säulen (1422) eine zweite Höhe (1424) aufweisen, wobei die erste Höhe (1414) und/oder die zweite Höhe (1424) 250-450 µm beträgt, noch bevorzugter 300-400 µm beträgt, besonders bevorzugt 350 µm beträgt.

5. Brennstoffzellenstapel (10) nach einem der Ansprüche 1 bis 4, **dadurch gekennzeichnet, dass** wenigstens eine der Kühlmittelseiten (1522) der Anodenplatte (1510) oder der Kathodenplatte (1520) eine dritte Strukturierung (1523) aufweist und die dritte Strukturierung (1523) eine Vielzahl von dritten Säulen (1524) zur Ausbildung eines lateral offenen Kühlmittelströmungsfeldes umfasst, wobei die dritten Säulen (1524) mit den ersten Säulen (1412) und den zweiten Säulen (1422) der Membran-Elektroden-Anordnungen (14) entlang einer Stapelrichtung (S) übereinander positioniert sind.

6. Fahrzeug, das ein Brennstoffzellensystem (100) mit einem Brennstoffzellenstapel (10) nach einem der Ansprüche 1 bis 5 aufweist.

## Claims

1. Fuel cell stack (10), comprising a stack of bipolar plates (15) and membrane electrode assemblies (14) arranged alternatingly between two end plates,
wherein the membrane electrode assembly (14) comprises the following:
- a membrane structure (140) with an anode layer, a cathode layer, and a membrane layer which is positioned between anode layer and cathode layer,
- a gas diffusion layer (1410) arranged on the anode side on the anode layer, and
- a gas diffusion layer (1420) arranged on the cathode side on the cathode layer,
wherein at least one of the gas diffusion layer (1410) on the anode side and the gas diffusion layer (1420) on the cathode side has on the side facing away from the membrane structure (140) a structuring (1411, 1421), which comprises a multiplicity of columns (1412, 1422) for forming a laterally open flow field, wherein the columns (1412, 1422) have contact surfaces (1413, 1423) for contacting the bipolar plate (15); and
wherein the bipolar plate (15) comprises the following:
- an anode plate (1510), the anode side (1511) of which faces the gas diffusion layer (1410) on the anode side of the membrane electrode assemblies (14), and
- a cathode plate (1520), the cathode side (1521) of which faces the gas diffusion layer (1420) on the cathode side of the membrane electrode assemblies (14),
**characterised in that** the anode side (1511) of the anode plate (1510) and/or the cathode side (1521) of the cathode plate (1520) are formed flat.

2. Fuel cell stack (10) according to claim 1, **characterised in that** the gas diffusion layer (1410) on the anode side has on the side facing away from the membrane structure (140) a first structuring (1411) and the gas diffusion layer (1420) on the cathode side has on the side facing away from the membrane structure (140) a second structuring (1421), wherein the first structuring (1411) comprises a multiplicity of columns (1412) for forming a laterally open flow field, wherein the first columns (1412) have first contact surfaces (1413) for contacting a bipolar plate (15); and the second structuring (1421) comprises a multiplicity of second columns (1422) for forming a laterally open flow field, wherein the second columns (1422) have second contact surfaces (1423) for contacting a bipolar plate (15).

3. Fuel cell stack (10) according to claim 2, **characterised in that** first columns (1412) and second columns (1422) are positioned such that a second column (1422) is positioned situated opposite each first column (1412) with respect to the membrane structure (140).

4. Fuel cell stack (10) according to any of claims 2 to 3, **characterised in that** the first columns (1412) have a first height (1414), the second columns (1422) have a second height (1424), wherein the first height (1414) and/or the second height (1424) is 250-450 µm, is more preferably 300-400 µm, is especially preferably 350 µm.

5. Fuel cell stack (10) according to any of claims 1 to 4, **characterised in that** at least one of the cooling agent sides (1522) of the anode plate (1510) or the cathode plate (1520) has a third structuring (1523) and the third structuring (1523) comprises a multiplicity of third columns (1524) to form a laterally open cooling agent flow field, wherein the third columns (1524) with the first columns (1412) and the second columns (1422) of the membrane electrode assemblies (14) are positioned above one another along a stack direction (S).

6. Vehicle, which has a fuel cell system (100) having a fuel cell stack (10) according to any of claims 1 to 5.

## Revendications

1. Empilement de cellules à combustible (10), comprenant un empilement de plaques bipolaires (15) agencées alternativement entre deux plaques d'extrémité et d'agencements d'électrodes à membrane (14),
dans lequel l'agencement d'électrodes à membrane (14) comprend les éléments suivants :
- une structure de membrane (140) avec une couche d'anode, une couche de cathode et une couche de membrane qui est positionnée entre la couche d'anode et la couche de cathode,
- une installation de diffusion de gaz côté anode (1410) agencée sur la couche d'anode, et
- une installation de diffusion de gaz côté cathode, agencée sur la couche de cathode (1420),
dans lequel au moins l'une de l'installation de diffusion de gaz côté anode (1410) et de l'installation de diffusion de gaz côté cathode (1420) présente, sur le côté opposé à la structure de membrane (140), une structuration (1411, 1421) qui comprend une pluralité de colonnes (1412, 1422) pour réaliser un champ d'écoulement ouvert latéralement, dans lequel les colonnes (1412, 1422) présentent des surfaces de contact (1413, 1423) pour venir en contact avec la plaque bipolaire (15) ; et
dans lequel la plaque bipolaire (15) comprend les éléments suivants :
- une plaque d'anode (1510), dont le côté anode (1511) est orienté vers l'installation de diffusion de gaz côté anode (1410) des agencements d'électrodes à membrane (14), et
- une plaque de cathode (1520) dont le côté cathode (1521) est orienté vers l'installation de diffusion de gaz côté cathode (1420) des agencements d'électrodes à membrane (14),
**caractérisé en ce que** le côté anode (1511) de la plaque d'anode (1510) et/ou le côté cathode (1521) de la plaque de cathode (1520) sont réalisés de manière plate.

2. Empilement de cellules à combustible (10) selon la revendication 1, **caractérisé en ce que** l'installation de diffusion de gaz côté anode (1410) présente une première structuration (1411) sur le côté opposé à la structure de membrane (140), et l'installation de diffusion de gaz côté cathode (1420) présente une deuxième structuration (1421) sur le côté opposé à la structure de membrane (140), dans lequel la première structuration (1411) comprend une pluralité de premières colonnes (1412) pour réaliser un champ d'écoulement ouvert latéralement, dans lequel les premières colonnes (1412) présentent des premières surfaces de contact (1413) pour venir en contact avec une plaque bipolaire (15) ; et la deuxième structuration (1421) comprend une pluralité de deuxièmes colonnes (1422) pour réaliser un champ d'écoulement ouvert latéralement, dans lequel les deuxièmes colonnes (1422) présentent des secondes surfaces de contact (1423) pour venir en contact avec une plaque bipolaire (15).

3. Empilement de cellules à combustible (10) selon la revendication 2, **caractérisé en ce que** les premières colonnes (1412) et les deuxièmes colonnes (1422) sont positionnées de telle sorte qu'une deuxième colonne (1422) est positionnée à l'opposé de chaque première colonne (1412) par rapport à la structure de membrane (140).

4. Empilement de cellules à combustible (10) selon l'une quelconque des revendications 2 à 3, **caractérisé en ce que** les premières colonnes (1412) présentent une première hauteur (1414), les deuxièmes colonnes (1422) présentent une seconde hauteur (1424), dans lequel la première hauteur (1414) et/ou la seconde hauteur (1424) s'élève/s'élèvent à 250-450 µm, encore plus préférentiellement s'élève/s'élèvent à 300-400 µm, le plus préférentiellement s'élève/s'élèvent à 350 µm.

5. Empilement de cellules à combustible (10) selon l'une quelconque des revendications 1 à 4, **caractérisé en ce qu'**au moins l'un des côtés d'agent de refroidissement (1522) de la plaque d'anode (1510) ou de la plaque de cathode (1520) présente une troisième structuration (1523), et la troisième structuration (1523) comprend une pluralité de troisièmes colonnes (1524) pour réaliser un champ d'écoulement d'agent de refroidissement ouvert latéralement, dans lequel les troisièmes colonnes (1524) sont positionnées les unes au-dessus des autres avec les premières colonnes (1412) et les deuxièmes colonnes (1422) des agencements d'électrodes à membrane (14) le long d'un sens d'empilement (S).

6. Véhicule qui présente un système de cellules à combustible (100) avec un empilement de cellules à combustible (10) selon l'une quelconque des revendications 1 à 5.
